(19) Europäisches Patentamt
European Patent Office
Office européen des brevets

(11) **EP 3 174 241 B1**

(12) **FASCICULE DE BREVET EUROPEEN**

(45) Date de publication et mention
de la délivrance du brevet:
**03.01.2018 Bulletin 2018/01**

(51) Int Cl.:
***H04L 9/32*** *(2006.01)*  ***H04L 29/06*** *(2006.01)*

(21) Numéro de dépôt: **16200383.4**

(22) Date de dépôt: **24.11.2016**

(54) **MÉTHODE D'ÉTABLISSEMENT D'UNE COMMUNICATION SÉCURISÉE DE BOUT EN BOUT ENTRE LE TERMINAL D'UN UTILISATEUR ET UN OBJET CONNECTÉ**

METHODE ZUR HERSTELLUNG EINER GESICHERTEN END-ZU-END-KOMMUNIKATION ZWISCHEN DEM ENDGERÄT EINES NUTZERS UND EINEM VERBUNDENEN OBJEKT

METHOD FOR ESTABLISHING SECURE END-TO-END COMMUNICATION BETWEEN A USER TERMINAL AND A CONNECTED OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2015 FR 1561408**

(43) Date de publication de la demande:
**31.05.2017 Bulletin 2017/22**

(73) Titulaire: **Commissariat à l'Energie Atomique et aux Energies Alternatives (CEA)
75015 Paris (FR)**

(72) Inventeur: **HENNEBERT, Christine
38700 La Tronche (FR)**

(74) Mandataire: **Brevalex
56, Boulevard de l'Embouchure
B.P. 27519
31075 Toulouse Cedex 2 (FR)**

(56) Documents cités:
**US-A- 5 694 471  US-A1- 2008 170 693
US-A1- 2013 230 166**

**Description**

**DOMAINE TECHNIQUE**

L'objet de la présente invention concerne la sécurité des réseaux et plus particulièrement celle de l'Internet des objets ou IoT (*Internet of Things*).

**ÉTAT DE LA TECHNIQUE ANTÉRIEURE**

L'apparition de technologies radio pervasives et à faible débit, adaptées à des objets autonomes et à faible consommation d'énergie, a permis récemment le développement de Internet des objets (IoT). L'IoT permet à un utilisateur d'accéder à des informations, encore dénommées ressources, issues de capteurs ou d'actionneurs, souvent distants et à faible autonomie. Le schéma retenu actuellement consiste à virtualiser ces ressources dans une passerelle (*gateway*) ou un serveur, connecté(e) à Internet ou à l'infrastructure. La sécurité de bout en bout (*end-to-end*), c'est-à-dire de l'utilisateur à la ressource, est assurée en fait entre l'utilisateur et l'élément virtualisant la ressource. Cela implique que l'élément qui stocke les ressources virtuelles soit un élément de confiance (*trusted*).

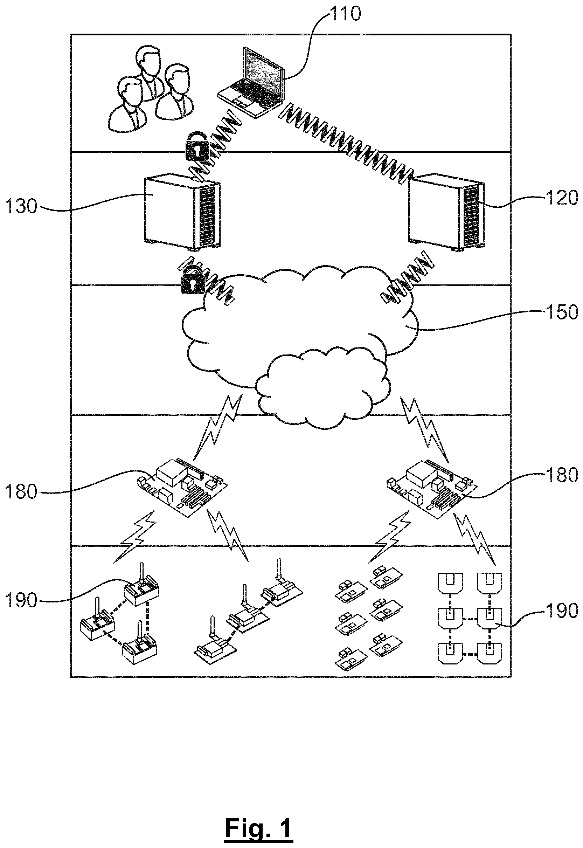

La Fig. 1 représente un scénario classique d'accès d'un utilisateur à une ressource associée à un objet.

L'utilisateur dispose d'une « machine », 110, (au sens de M2M), généralement un smartphone, une tablette ou un ordinateur et se connecte à Internet, 150. Par l'intermédiaire d'une application, située sur un serveur d'applications, 120, dans le Cloud, il peut accéder à des ressources distantes fournies par des objets connectés,190, contraints en mémoire, en puissance de calcul et en énergie. Ces objets peuvent communiquer avec des passerelles 180 via des liaisons radio à faible énergie aux moyens de standards de communication tels que IEEE 802.15.4, Bluetooth, Zigbee, etc.

Les passerelles 180 assurent l'interopérabilité entre les standards de communication précités et ceux utilisés par les passerelles pour leur liaison à Internet (par exemple Wifi, Ethernet, GPRS). En revanche, les passerelles 180 ne sont pas capables d'assurer l'interopérabilité des protocoles de sécurité entre les objets connectés et Internet. Pour cette raison, elles stockent les informations issues des différents objets connectés, ce qui implique qu'elles soient de confiance.

Il est connu dans une telle architecture de garantir la sécurité de la communication entre l'utilisateur et la passerelle de virtualisation au moyen d'un chiffrement. Les principes de sécurité par la conception (*security by design*) imposent de faire transiter le matériel de chiffrement (clés de chiffrement, jetons, graines de générateurs pseudo-aléatoires) par un chemin distinct de celui emprunté par les données. Dans ce cas, l'utilisateur s'identifie d'abord au moyen d'un login/mot de passe auprès d'un serveur de sécurité 130. En cas de succès, le serveur de sécurité distribue un même jeton d'accès à l'utilisateur et à la passerelle de virtualisation 180. Ce jeton d'accès indique que l'utilisateur possède un droit d'accès à la ressource via une application donnée (du serveur d'applications). Le matériel de chiffrement, notamment des clés de chiffrement symétriques, sont également distribuées à l'utilisateur et à la passerelle via un canal sécurisé (SSL/TLS ou IPsec). L'utilisateur et l'élément stockant la ressource virtuelle peuvent ensuite communiquer de façon confidentielle.

Diverses solutions existent pour assurer une sécurité de communication de bout en bout entre la machine de l'utilisateur et l'objet connecté.

Une première solution est d'équiper l'objet connecté d'un élément de sécurité (*secure element*) tel qu'une carte SIM par exemple. Toutefois dans le contexte d'objets connectés à très faible autonomie, cette solution est exclue en pratique.

Une seconde solution, consiste à pousser le jeton de d'accès ainsi que le matériel de chiffrement depuis le serveur de sécurité jusqu'à l'objet connecté. Le jeton d'accès et éventuellement le matériel cryptographique associé transitent alors par une passerelle qui doit être de confiance (*trusted*) car elle a accès en clair à ces informations lors de la conversion de protocole. La notion de sécurité *end-to-end* est alors interrompue au niveau de la passerelle.

Une troisième solution consiste à générer ou à insérer le matériel cryptographique dans l'objet connecté avant son déploiement et à utiliser un canal hors bande pour le transmettre vers le serveur d'autorisation. Par exemple, l'utilisateur peut, dans un premier temps, approcher son smartphone de l'objet connecté et récupérer par voie optique (signal lumineux, scan d'un QR code sur l'objet) une information décrivant numériquement la valeur secrète de la clé symétrique stockée dans l'objet lors de son déploiement. Le smartphone se connecte ensuite à l'infrastructure et transmet l'information de clé symétrique au serveur de sécurité via un canal sécurisé. Dans ce cas, le smartphone se comporte comme une passerelle de confiance (*trusted*). La clé symétrique est alors stockée dans le profil de l'utilisateur au niveau du serveur de sécurité pour l'établissement d'une communication sécurisée avec l'objet connecté. Le serveur de sécurité peut ensuite pousser le matériel de chiffrement (une clé secrète) ainsi qu'un jeton d'accès jusqu'à l'objet connecté. L'utilisateur dispose des mêmes informations via sa liaison sécurisée avec le serveur de sécurité et peut donc établir une communication sécurisée avec l'objet connecté.

Cette troisième solution n'est toutefois pas satisfaisante dans la mesure où elle nécessite, d'une part, d'utiliser un canal hors bande et, d'autre part, d'utiliser une passerelle de confiance, le smartphone dans ce cas.

L'objet de la présente invention est par conséquent de proposer une méthode d'établissement d'une communication sécurisée de bout en bout entre le terminal d'un utilisateur et un objet connecté, notamment un objet connecté contraint en termes d'énergie, de mémoire et de capacité de calcul, qui ne présente pas les inconvénients de l'état de l'art. En particulier, la méthode d'établissement de la communication sécurisée avec l'objet connecté devra permettre de se dispenser d'un élément de sécurité intégré dans cet objet connecté ainsi que d'un canal de communication auxiliaire pour faire transiter le matériel cryptographique. Enfin et surtout, elle devra permettre d'avoir accès directement à la ressource fournie par l'objet connecté sans requérir de virtualisation ni de passerelle de confiance.

Le document de Publication de Demande de Brevet US 2008/0170693 A1, assigné à Spies et al. et publié le 17 Juillet 2008, expose un procédé de chiffrement et d'établissement d'une communication sécurisée, exécuté par un serveur à l'aide d'un ensemble d'informations d'identifiant et d'une clé racine, avec l'appui d'une base de données.

## EXPOSÉ DE L'INVENTION

La présente invention est définie par une méthode d'établissement d'une communication sécurisée de bout en bout entre le terminal d'un utilisateur/ un serveur d'intermédiateur de contexte et un objet connecté, ladite méthode mettant en oeuvre un premier serveur, dit serveur d'autorisation d'accès et un second serveur, dit serveur de production, le terminal de l'utilisateur communiquant avec le serveur d'autorisation d'accès par une première communication sécurisée et le serveur de production communiquant avec le serveur d'autorisation d'accès par une seconde communication sécurisée, le serveur d'autorisation d'accès hébergeant une première base de données contenant des informations permettant d'authentifier les différents utilisateurs et de gérer leurs droits d'accès aux différents objets connectés, le serveur de production hébergeant une seconde base de données contenant des identifiants d'objets connectés et possédant un couple de clés privée et publique initiales ($K_{init}, Q_{init}$), ladite méthode comprenant les étapes suivantes :

(a) sur une requête de l'utilisateur contenant l'identifiant de l'objet connecté ($SN$), demande de vérification du serveur d'autorisation d'accès auprès du serveur de production que cet identifiant est bien valide ;

(b) sur initialisation de l'objet connecté, identification et authentification de l'objet connecté auprès du serveur de production, au moyen d'un premier message ($M_1$) contenant l'identifiant de l'objet connecté ainsi que ce même identifiant, chiffré par la clé publique initiale ($Q_{init}$);

(c) en cas de succès d'authentification de l'objet connecté, génération par le serveur d'autorisation d'accès d'un second message ($M_2$) contenant les paramètres d'un cryptosystème, le second message étant préalablement signé par le serveur de production, le message ainsi que sa signature (sgn($M_2$)) étant transmis à l'objet connecté;

(d) génération par l'objet connecté d'un couple de clés privée et publique d'accès $(K_F, Q_F)$, à partir des paramètres du cryptosystème, permettant d'établir une troisième communication sécurisée (225) entre le serveur d'autorisation d'accès et l'objet connecté;

(e) établissement d'une communication sécurisée entre le terminal de l'utilisateur, resp. le serveur d'intermédiation de contexte, et l'objet connecté au moyen d'une clé symétrique, distribuée par le serveur d'autorisation d'accès, d'une part au terminal d'utilisateur via la première communication sécurisée, resp. au serveur d'intermédiation via une quatrième communication sécurisée, et, d'autre part, à l'objet connecté via la troisième communication sécurisée.

A l'étape (a), le serveur de production effectue avantageusement un horodatage de l'identifiant de l'objet connecté et stocke l'estampille d'horodatage dans la seconde base de données en relation avec ledit identifiant.

Lors de ou suite à son initialisation à l'étape (b), l'objet connecté génère un jeton de session *(TK)* sous la forme d'un premier nombre aléatoire ($RN_1$), ainsi qu'un second nombre aléatoire ($RN_2$).

Le premier message ($M_1$) comprend avantageusement une première partie en clair comprenant l'identifiant de l'objet connecté ($SN$), et une second partie chiffrée au moyen de la clé publique initiale ($Q_{init}$), la seconde partie comprenant ce même identifiant, la clé de session, ainsi que, le cas échéant, un certificat ($CQ_{init}$) de la clé publique initiale.

A l'étape (b), le serveur de production identifie l'objet connecté si son identifiant est présent dans la seconde base de données.

En outre, à l'étape (b), le serveur de production authentifie l'objet connecté en déchiffrant la seconde partie du premier message à l'aide de la clé privée initiale et en comparant le résultat du déchiffrage avec la première partie.

Préférentiellement, à l'étape (b), le serveur de production ne déclare l'objet connecté que si, à la date de l'authentification, l'estampille d'horodatage n'est pas périmée.

Le serveur de production peut alors transmettre au serveur d'autorisation d'accès le résultat de l'authentification (*ACK,NACK*) accompagné du numéro d'identifiant de l'objet connecté et, le cas échéant, du certificat de la clé publique initiale ($CQ_{init}$).

En cas de succès d'authentification à l'étape (b), le serveur d'autorisation d'accès stocke dans la première base de données le jeton de session en relation avec l'identifiant d'objet connecté.

Avantageusement, à l'étape (c), le second message ($M_2$) comprend l'identifiant d'objet connecté *(SN)*, le jeton de session (*TK*), la clé publique du serveur d'autorisation d'accès ($Q_{auth}$) et les paramètres d'un cryptosystème.

De préférence, le cryptosystème est un cryptosystème sur une courbe elliptique.

Le serveur de production signe le second message au moyen de la clé privée initiale et renvoie la signature ainsi obtenue (sgn($M_2$) au serveur d'autorisation d'accès.

Le serveur d'autorisation d'accès transmet ensuite le second message ($M_2$) ainsi que sa signature (sgn($M_2$) à l'objet connecté.

Selon une première variante, à l'étape (d), l'objet connecté génère une clé publique temporaire à partir du second nombre aléatoire et d'un point générateur (*G*) sur la courbe elliptique.

L'objet connecté peut alors générer un troisième message ($M_3$) contenant, dans une première partie en clair, son identifiant et, dans une seconde partie chiffrée au moyen de la clé publique du serveur d'autorisation d'accès ($Q_{auth}$), ce même identifiant, le certificat de la clé publique initiale ($CQ_{init}$), le jeton d'accès ainsi que la clé publique temporaire ($Q_{temp}$).

Le serveur d'autorisation d'accès génère avantageusement un certificat implicite d'une clé publique d'accès ($Cert_F$) ainsi qu'une signature de ce certificat ($Sign_F$) à partir de la clé publique temporaire ($Q_{temp}$), d'un troisième nombre aléatoire (*k*), du jeton de session (*TK*), de la clé privée du serveur d'autorisation ($K_{auth}$) et des paramètres du cryptosystème sur courbe elliptique.

Le serveur d'autorisation d'accès génère ensuite un quatrième message ($M_4$) comprenant le certificat implicite de la clé publique d'accès ($Cert_F$) ainsi que sa signature ($Sign_F$), ce message ainsi que sa signature ($Sgn(M_4)$ au moyen de la clé privée du serveur d'autorisation d'accès étant transmis à l'objet connecté.

L'objet connecté, après avoir vérifié l'intégrité du quatrième message au moyen de la clé publique du serveur d'autorisation d'accès, génère avantageusement ledit couple de clés privée et publique d'accès ($K_F, Q_F$) à partir du certificat implicite de la clé publique d'accès ($Cert_F$) et de sa signature ($Cert_F$), du jeton de session (*TK*), de la clé publique d'autorisation d'accès ($Q_{auth}$) et des paramètres du cryptosystème sur courbe elliptique.

Selon une seconde variante, l'objet connecté génère la clé privée d'accès ($K_F$) à partir du second nombre aléatoire ($RN_2$) et la clé publique d'accès ($Q_F$) à partir de cette dernière et des paramètres du cryptosytème sur courbe elliptique.

Dans ce cas, l'objet connecté génère avantageusement un troisième message ($M_3$) contenant, dans une première partie en clair, son identifiant et, dans une seconde partie chiffrée au moyen de la clé publique du serveur d'autorisation d'accès ($Q_{auth}$), ce même identifiant, le certificat de clé initiale, $CQ_{init}$, le jeton d'accès, ainsi que la clé publique d'accès ($Q_F$).

Le serveur d'autorisation d'accès génère alors un certificat X.509 ($Cert_{X.509}$) de la clé publique d'accès ($Q_F$), à partir de l'identifiant de l'objet connecté et de la clé publique d'accès, au moyen de sa clé privée d'autorisation d'accès ($K_{auth}$).

Le serveur d'autorisation d'accès peut également générer un quatrième message ($M_4$) comprenant le certificat de la clé publique d'accès ($Cert_{X.509}$) ainsi que sa signature ($Sign_{auth}(M_4)$) au moyen de la clé privée du serveur d'autorisation d'accès, ce message ainsi que sa signature ($Sign_{auth}(M_4)$) étant transmis à l'objet connecté.

Après avoir vérifié l'intégrité du quatrième message au moyen de la clé publique du serveur d'autorisation d'accès, l'objet connecté stocke avantageusement dans sa mémoire le certificat de la clé publique d'accès ($Cert_{X.509}$).

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 représente schématiquement un scenario d'accès par un utilisateur à une ressource associée à un objet connecté tel que connu de l'état de la technique ;
La Fig. 2 représente schématiquement l'architecture d'un système permettant d'établir une communication sécurisée entre le terminal d'un utilisateur et un objet connecté ;
La Fig. 3 représente schématiquement un ordinogramme d'une méthode d'établissement d'une communication sécurisée entre le terminal d'un utilisateur et un objet connecté, selon un mode de réalisation de l'invention ;
Les Figs. 4A et 4B représentent une première partie des échanges entre les éléments du système de la Fig. 2 lors de la mise en oeuvre de la méthode d'établissement d'une communication sécurisée selon le mode de réalisation de l'invention représenté en Fig. 3;
La Fig. 5A représente une seconde partie des échanges entre les éléments du système de la Fig. 2 lors de la mise en oeuvre de la méthode d'établissement d'une communication sécurisée selon une première variante du mode de réalisation de l'invention représenté en Fig. 3 ;
La Fig. 5B représente une seconde partie des échanges entre les éléments du système de la Fig. 2 lors de la mise en oeuvre de la méthode d'établissement d'une communication sécurisée selon une seconde variante du mode de réalisation de l'invention représenté en Fig. 3.

**EXPOSÉ DÉTAILLÉ DE MODES DE RÉALISATION PARTICULIERS**

Nous entendrons dans la suite par objets connectés des objets ayant une capacité de communication, généralement au moyen d'un seul standard de communication sans fil (IEEE 802.15.4, Bluetooth, Zigbee, etc.) mais ne disposant que de ressources très limitées (CPU, RAM, taille de mémoire flash, énergie). Par exemple, les objets ne posséderont que quelques dizaines d'octets de RAM et quelques centaines voire quelques dizaine de kilooctets de mémoire flash. Ces objets connectés pourront être notamment des capteurs organisés sous la forme de réseau sans fil ou WSN *(Wireless Sensor Network)*.

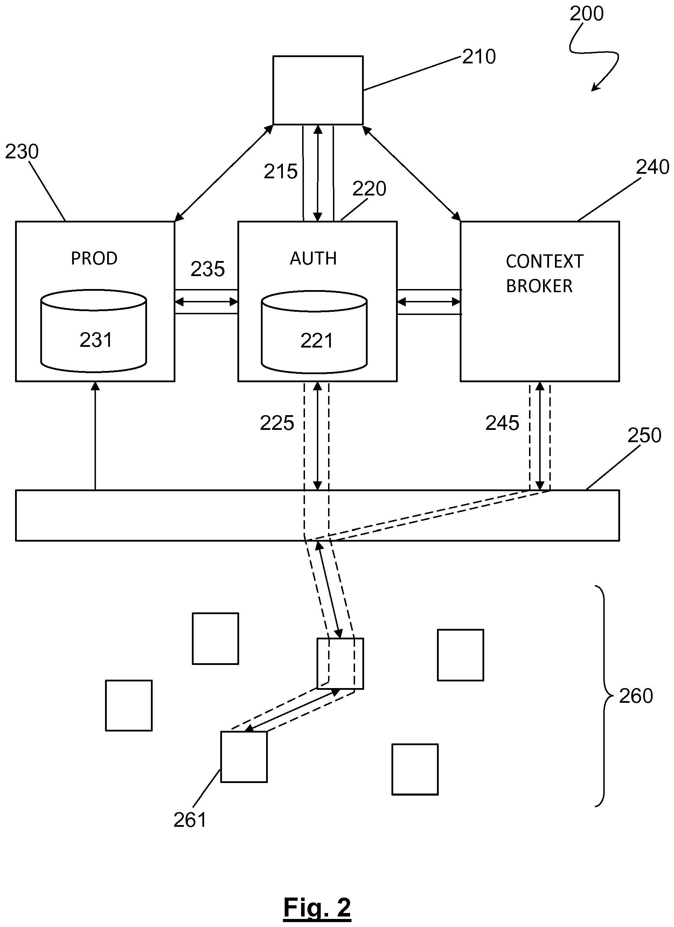

La Fig. 2 représente de manière schématique l'architecture d'un système permettant l'établissement d'une communication sécurisée entre le terminal d'un utilisateur et un objet connecté.

Le système, 200, comprend le terminal d'un utilisateur, encore dénommé plus simplement utilisateur, 210, un premier serveur, dit serveur d'autorisation d'accès, 220, et un second serveur, dit serveur de production, 230. Le terminal de l'utilisateur peut être un smartphone, une tablette ou un ordinateur. L'utilisateur peut se connecter au serveur d'autorisation d'accès via Internet au moyen d'une communication sécurisée par un protocole tel que HTTPS *(HyperText Transfer Protocol Secured)* ou SSH *(Secure SHell)*.

Le serveur d'autorisation d'accès 220 héberge une première base de données, 221, contenant des informations permettant d'authentifier les différents utilisateurs, de gérer leurs droits d'accès aux différents objets connectés et ainsi d'autoriser l'accès des utilisateurs à ces derniers. Pour ce faire, il gère les profils des différents utilisateurs ou groupes d'utilisateurs. Par exemple, à chaque utilisateur (ou groupe d'utilisateurs) est associée une liste d'objets connectés, déterminés par leurs identifiants respectifs. Ainsi, le serveur d'autorisation peut déterminer si un utilisateur donné peut accéder à telle ou telle ressource d'un objet connecté, le cas échéant en distinguant s'il peut y accéder via une passerelle de virtualisation ou bien par une communication sécurisée de bout-en-bout.

Le serveur de production, 230, est connecté au serveur d'autorisation au moyen d'une communication sécurisée 235, par exemple grâce à un protocole tel que HTTPS *(HyperText Transfer Protocol Secured)* ou SSH *(Secure SHell)*.

Le serveur de production héberge une seconde base de données, 231, contenant notamment les identifiants (par exemple les numéros de série) des différents objets connectés ainsi que le matériel cryptographique initial qui a été utilisé lors du flash de leurs EEPROM (ou stocké dans une mémoire interne). Le matériel cryptographique initial peut comprendre un couple de clés publique et privée initiales ($K_{init}, Qi_{nit}$) d'un système de chiffrement asymétrique ainsi le certificat $CQ_{init}$ associé à la clé publique, par exemple un certificat X.509. De préférence, toutefois, le chiffrement utilisé est un chiffrement sur courbes elliptiques utilisant des certificats implicites dont le principe est rappelé ci-après. Dans ce cas, le certificat $CQ_{init}$ de la clé publique initiale est constitué du certificat implicite $Cert_{init}$ et de la signature du certificat, $Sign_{init}$, par le serveur de production.

Comme indiqué plus haut, le serveur de production peut utiliser un chiffrement sur courbes elliptiques avec certificats implicites. On suppose que le serveur de production dispose d'un identifiant $ID_{prod}$ et d'un couple de clés privée et publique ($K_{prod}, Q_{prod}$) d'un système asymétrique.

Le certificat implicite $Cert_{init}$ est d'abord construit à partir de deux nombres aléatoires $\lambda$ et $\mu$ :

$$Cert_{init} = \lambda G + \mu G \text{ mod. n} \tag{1}$$

où G est un point générateur d'ordre *n* du cryptosystème elliptique. Le certificat implicite est donc un point de la courbe elliptique (multiple de G). La signature initiale est quant à elle obtenue au moyen de :

$$Sign_{init} = h_{init}\lambda + K_{prod} \text{ mod. n} \tag{2}$$

où $h_{init} = H(Cert_{init}||ID_{prod})$, *H* est une fonction de hash telle que SHA et $||$ est le symbole de concaténation. La clé publique initiale $Q_{init}$ se déduit directement du certificat implicite :

$$Q_{init} = h_{int}Cert_{init} + Q_{prod} \tag{3}$$

et la clé privée initiale associée est obtenue par :

$$K_{init} = \left( h_{init} \lambda + Sign_{init} \right) \ \text{mod. n} \tag{4}$$

Les objets connectés 261, éventuellement organisés sous forme de réseau 260, ne possèdent pas les ressources de communication leur permettant de se connecter directement à Internet. Ils utilisent pour ce faire une passerelle 250 qui réalise l'interface entre le standard de communication sans fil utilisé par les objets connectés (IEEE 802.15.4, Bluetooth, Zigbee, etc.) et l'infrastructure IP d'Internet.

Chaque objet connecté dispose d'un numéro de série (*SN*) qui lui est physiquement associé (par exemple inscrit sur l'objet en question). En outre, chaque objet connecté contient dans son EEPROM :

- l'URL du serveur de production, $URL_{prod}$ qui a servi à flasher l'EEPROM;
- les éléments publics du matériel cryptographique initial, à savoir la clé publique initiale, $Q_{init}$, ainsi que son certificat $CQ_{init}$.

L'URL du serveur de production, $URL_{prod}$, ainsi que les éléments publics du matériel cryptographique initial sont avantageusement stockés dans une partie sécurisée (chiffrée) de la mémoire (EEPROM) de l'objet connecté.

Les différents objets connectés produits pendant un intervalle donné de production peuvent tous contenir les mêmes éléments de matériel cryptographique $Q_{init}$, $CQ_{init}$. Toutefois, le serveur de production peut disposer de plusieurs images précompilées du logiciel à installer dans les EEPROM des objets connectés, ces images précompilées correspondant à des matériels cryptographiques distincts (différents couples de clés ($K_{init}$, $Q_{init}$) et différents certificats $CQ_{init}$). Lors de la production, les images précompilées servent ensuite à flasher les EEPROM des objets connectés de manière aléatoire.

Une fois que la communication sécurisée est établie de bout-en-bout, autrement dit du terminal de l'utilisateur à l'objet connecté, par le serveur d'autorisation d'accès, 220, l'utilisateur peut ensuite communiquer directement de manière sécurisée avec l'objet connecté.

Alternativement, le serveur d'autorisation d'accès, 220, peut permettre d'établir une communication sécurisée, 245, entre un serveur intermédiateur de contexte (*context broker*), 240, et l'objet connecté. On rappelle qu'un intermédiateur de contexte a pour fonction de contextualiser les données fournies par différents objets connectés, par exemple des mesures effectuées par différents capteurs, par exemple en les géolocalisant et/ou en les horodatant. L'utilisateur peut alors consulter les données contextualisées au moyen d'une communication sécurisée.

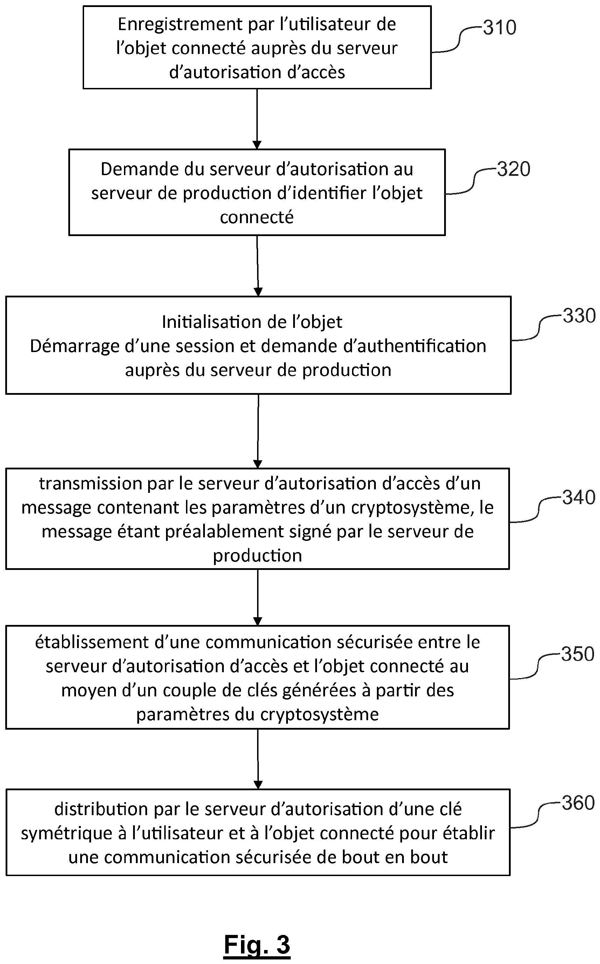

La Fig. 3 représente schématiquement un ordinogramme d'une méthode d'établissement d'une communication sécurisée entre le terminal d'un utilisateur et un objet connecté, selon un mode de réalisation de l'invention.

A une étape préalable 310, l'utilisateur 210 enregistre un objet connecté 261 auprès du serveur d'autorisation d'accès. Plus précisément, l'utilisateur transmet au serveur d'autorisation d'accès une requête d'enregistrement ayant pour argument le numéro de série *SN* de l'objet connecté en question et l'URL $URL_{prod}$ du serveur de production. Le serveur d'autorisation d'accès enregistre le numéro de série *SN* sous le profil de l'utilisateur ainsi que l'adresse $URL_{prod}$ associée à l'objet connecté.

Dans une première étape, 320, sur requête de l'utilisateur contenant l'identifiant de l'objet connecté *(SN)*, le serveur d'autorisation d'accès demande auprès du serveur de production si cet identifiant est bien valide.

Sur réception de cette demande de vérification, le serveur de production peut effectuer un horodatage du numéro de série *SN* et enregistrer l'estampille d'horodatage (ou valeur d'horodatage) obtenue, *TS*(*SN*), dans la seconde base de données 231, en relation avec le numéro de série.

Dans une seconde étape, 330, indépendante de la première, l'objet connecté est initialisé. Suite à cette initialisation, le serveur de production authentifie l'objet connecté. Pour ce faire, l'objet connecté transmet au moyen d'un premier message ($M_1$) contenant l'identifiant de l'objet connecté ainsi que ce même identifiant, chiffré par la clé publique initiale ($Q_{init}$)

Plus précisément, lors de son initialisation, l'objet connecté génère un premier nombre aléatoire ($RN_1$) qui servira de jeton de session *TK* ($TK=RN_1$) et un second nombre aléatoire ($RN_2$) qui servira à générer ultérieurement la clé privée de l'objet connecté. Les nombres aléatoires sont générés par exemple à partir d'une série de mesures physiques.

L'objet connecté transmet ensuite au serveur de production 230 une demande d'ouverture de session. A cette fin, l'objet connecté transmet au serveur de production un premier message, $M_1$, comprenant dans une partie en clair le numéro de série de l'objet connecté et dans une partie chiffrée par la clé publique initiale, $Q_{init}$, le jeton de session, le numéro de série, *SN*, ainsi que le certificat de la clé publique initiale, $CQ_{init}$.

Le serveur de production 230 vérifie si le numéro de série est valide, c'est-à-dire s'il est bien répertorié dans la base de données 231. Il authentifie également l'objet connecté. Pour ce faire, le serveur de production déchiffre la partie chiffrée du premier message à l'aide de la clé privée initiale $K_{init}$ et détermine si le numéro de série contenu dans la partie chiffrée est bien celui le numéro de série *SN* contenu dans la partie en clair du premier message.

Optionnellement, le serveur de production, vérifie que la valeur d'horodatage *TS*(*SN*) du numéro de série *SN* est récente, autrement dit qu'elle n'est pas antérieure à *t*-$\Delta$ où *t* est la date de contrôle et $\Delta$ est la durée de péremption. Dans le cas où le contrôle de péremption est mis en place, l'authentification n'est considérée comme réussie que dans la mesure où l'horodatage n'est pas périmé.

Lors d'une troisième étape, 340, en cas de succès d'authentification, le serveur d'autorisation d'accès génère un second message ($M_2$) contenant les paramètres d'un cryptosystème, ce second message étant préalablement signé par le serveur de production, le message ainsi que sa signature étant transmis à l'objet connecté.

Plus précisément, en cas de succès de l'authentification, le serveur de production enregistre dans sa base de données 231 le jeton de session, *TK,* en relation avec le numéro de série *SN.* Il transmet également au serveur d'autorisation d'accès le résultat de l'authentification (*ACK*), accompagné du jeton de session, *TK,* et du certificat, $CQ_{init}$ de la clé publique initiale.

En cas d'échec de l'authentification, la procédure d'établissement de communication sécurisée de bout-en-bout est avortée.

Le serveur d'autorisation est ainsi averti de l'identification et de l'authentification de l'objet connecté par le serveur de production.

Le serveur d'autorisation d'accès transmet alors à l'objet connecté un second message, $M_2$, contenant toutes les informations nécessaires à la création d'un canal sécurisé entre le serveur d'autorisation d'accès et l'objet connecté. Toutefois, étant donné que le serveur d'autorisation d'accès est inconnu de l'objet connecté à ce stade, celui-ci fait préalablement signer le message $M_2$ par le serveur de production au moyen de la clé, $K_{init}$. Le serveur d'autorisation d'accès envoie le message $M_2$, accompagné de la signature $\mathrm{Sgn}_{prod}$ ($M_2$) ainsi obtenue, à l'objet connecté. Il faut noter que les informations contenues dans le message $M_2$ sont publiques. De préférence, le message $M_2$ contiendra (en clair) le numéro de série *SN,* le jeton de session *TK,* la clé publique du serveur d'autorisation d'accès, $Q_{auth}$ ainsi que les paramètres d'un cryptosystème pour générer un couple de clés privée et publique. Par exemple, si le cryptosystème choisi est basé sur des courbes elliptiques, c'est-à-dire un cryptosystème ECC (*Elliptic Curve Cryptography*), les paramètres transmis sont les paramètres standards décrivant la courbe elliptique (taille du domaine, paramètres de la courbe, point générateur, ordre de la courbe et cofacteur).

A l'étape 350, l'objet connecté et le serveur d'autorisation d'accès peuvent établir une communication sécurisée au moyen du couple de clés privée et publique ($K_{auth},Q_{auth}$). L'objet connecté et le serveur d'autorisation d'accès échangent au moyen de cette communication sécurisée les informations nécessaires pour générer un couple de clés privée et publique ($K_F,Q_F$) ainsi qu'un certificat $Cert_F$ de la clé publique $Q_F$. Plus précisément, au cours de cet échange l'objet connecté génère le couple de clés ($K_F,Q_F$) et le serveur d'autorisation d'accès génère le certificat $Cert_F$. On notera que l'opération la plus gourmande en ressources de calcul, à savoir la génération du certificat, est effectuée par le serveur d'autorisation d'accès.

Au terme de l'étape 350, le serveur d'autorisation d'accès dispose d'une part d'un premier canal sécurisé, 215, avec l'utilisateur et d'un second canal sécurisé, 225, (au moyen du couple de clés ($K_F,Q_F$) avec l'objet connecté). On notera qu'à la différence de l'état de la technique la clé secrète $K_F$ a été générée par l'objet connecté lui-même.

A l'étape 360, le serveur d'autorisation d'accès peut ensuite distribuer aux deux parties (utilisateur et objet connecté) une clé symétrique via les canaux sécurisés 215 et 225, pour établir une communication sécurisée de bout en bout entre elles.

Alternativement, le serveur d'autorisation d'accès peut distribuer à l'objet connecté et au serveur intermédiateur de contexte, 240, une clé symétrique via les canaux sécurisés 215 et 245 pour établir une communication sécurisée entre eux.

En outre, le serveur d'autorisation d'accès peut transmettre via ces mêmes canaux sécurisés un jeton d'accès aux deux parties (l'objet connecté, d'une part, et le terminal d'utilisateur d'autre part ou bien l'objet connecté d'une part et le serveur intermédiateur de contexte, d'autre part). Le jeton d'accès permet notamment d'accéder à des ressources ou des services particuliers fournis par le serveur intermédiateur.

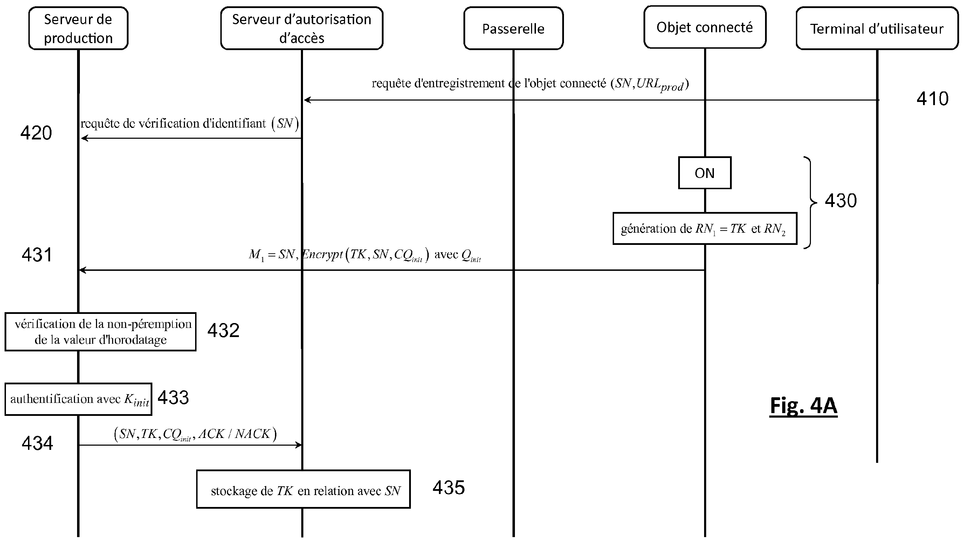

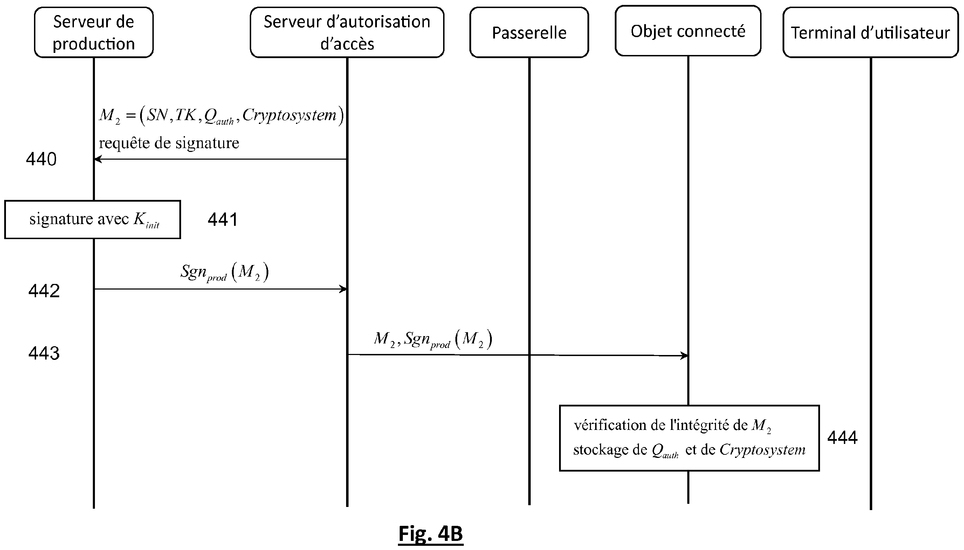

Les Figs. 4A et 4B représentent une première partie des échanges entre les différents éléments du système de la Fig. 2 lors de la mise en oeuvre de la méthode d'établissement d'une communication sécurisée selon le mode de réalisation de l'invention précédemment décrit. Cette première partie est commune à une première et une seconde variantes de ce mode de réalisation.

Les différents éléments du système ont été représentés dans le diagramme temporel, à savoir le terminal d'utilisateur 210, le serveur de production 230, le serveur d'autorisation d'accès, 220, la passerelle 250 et l'objet connecté, 261.

A l'étape 410, l'utilisateur transmet au serveur d'autorisation d'accès une requête d'enregistrement ayant pour argument l'identifiant (par exemple le numéro de série *SN*) de l'objet connecté en question et l'URL $URL_{prod}$ du serveur de production. Cette requête est transmise sur le canal sécurisé 215 (HTTPS ou SSH).

Le serveur d'autorisation d'accès transmet ensuite en 420, via le canal sécurisé 235, une requête de vérification au serveur de production ayant pour argument l'identifiant de l'objet connecté. Le serveur de production détermine alors si l'identifiant est bien dans la seconde base de données 231. Dans l'affirmative, il procède en 421 à un horodatage de la requête et stocke l'estampille d'horodatage $TS(SN)$ dans la seconde base de données 231, en relation avec l'identifiant. Il confirme ensuite en 422 au serveur d'autorisation que l'objet connecté est bien identifié.

A l'étape 430, l'utilisateur initialise l'objet connecté. Lors de son initialisation ou suite à celle-ci, l'objet connecté génère un premier nombre aléatoire ($RN_1$) qui servira de jeton de session $TK$ ($TK=RN_1$) et un second nombre aléatoire ($RN_2$) qui servira à générer ultérieurement la clé privée de l'objet connecté. Il transmet ensuite en 431 au serveur de production un premier message $M_1$ comprenant une partie en clair et une seconde partie chiffrée par la clé publique initiale, $Q_{init}$. La première partie contient l'identifiant ($SN$) et la seconde partie contient le jeton de session, l'identifiant ainsi que le certificat de la clé publique initiale, $CQ_{init}$. Lorsque le chiffrement est un chiffrement sur courbes elliptiques utilisant des certificats implicites, le certificat $CQ_{init}$ est constitué du certificat implicite $Cert_{init}$ et de sa signature, $Sign_{init}$, par le serveur de production.

Le serveur de production récupère l'estampille d'horodatage dans la seconde base de données, à partir de l'identifiant de l'objet connecté. En 432, si la valeur d'horodatage est antérieure à $t$-$\Delta$ où $t$ est la date de contrôle et $\Delta$ une durée de péremption, la déclaration de l'objet connecté est considérée comme périmée (ce qui nécessite un renouvellement de sa déclaration par l'utilisateur) et l'authentification échoue. Le serveur de production déchiffre ensuite la seconde partie du message et compare en 433 la valeur de l'identifiant dans la seconde partie déchiffrée avec celle dans la première part. Lorsque ces deux valeurs coïncident, le serveur de production considère que l'objet connecté est authentifié. A défaut, l'authentification échoue. En tout état de cause, en 434, le serveur de production transmet au serveur d'autorisation d'accès, via le canal sécurisé 215, un message d'authentification. Celui-ci comprend l'identifiant de l'objet connecté *(SN),* le jeton de session, $TK$, le certificat de la clé publique initiale $CQ_{init}$, ainsi que le résultat d'authentification (*ACK* ou *NACK*).

Le serveur d'autorisation d'accès est ainsi averti que l'objet connecté a bien été identifié et authentifié. Il enregistre alors en 435, dans la première base de données, le jeton de session en relation avec l'identifiant de l'objet en question.

Le serveur d'autorisation d'accès construit un second message, $M_2$, contenant toutes les informations nécessaires à la création d'un canal sécurisé entre le serveur d'autorisation d'accès et l'objet connecté, et l'envoie en 440 au serveur de production. Le message $M_2$ contient (en clair) l'identifiant $SN$, le jeton de session $TK$, la clé publique du serveur d'autorisation d'accès, $Q_{auth}$ ainsi que les paramètres d'un cryptosystème (*Cryptosystem*) pour générer un couple de clés privée et publique.

Le serveur de production signe en 441 le message $M_2$ au moyen de la clé privée initiale, $K_{init}$ et renvoie, en 442, la signature ainsi obtenue, $Sign_{prod}(M_2)$, au serveur d'autorisation d'accès. Ce dernier transmet en 443 le message $M_2$, accompagné de la signature $Sign_{prod}(M_2)$ ainsi obtenue, à l'objet connecté.

En 444, l'objet connecté vérifie à l'aide de la clé publique initiale, $Q_{init}$, que le message $M_2$ est bien intègre et, dans l'affirmative, stocke dans sa mémoire la clé publique, $Q_{auth}$ ainsi que les paramètres du cryptosystème (*Cryptosystem*).

La suite des échanges entre les éléments du système dépend de la variante considérée.

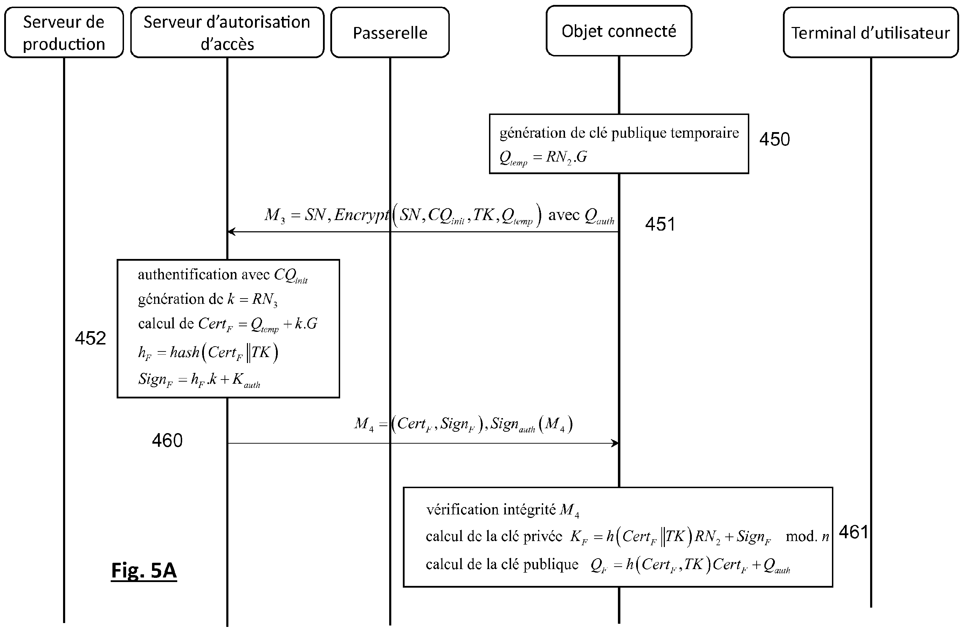

La Fig. 5A représente une seconde partie des échanges entre les éléments du système de la Fig. 2 lors de la mise en oeuvre de la méthode d'établissement d'une communication sécurisée selon une première variante du mode de réalisation. Cette seconde partie fait suite à la première partie précédemment décrite en relation avec les Figs. 4A et 4B.

Cette première variante fait appel à un cryptosystème sur courbes elliptiques avec certificats implicites. Dans ce cas, les paramètres du cryptosystème (*Cryptosystem*) dans le message $M_2$ sont $p$ la caractéristique du corps, $a,b$ les paramètres de la courbe elliptique, G, une point générateur appartenant à la courbe elliptique et $n$ l'ordre de $G$.

A l'étape 450, l'objet connecté génère une clé publique temporaire $Q_{temp}$ à partir d'une clé privée $K_{temp}$ prise égale au second nombre aléatoire $RN_2$. En 451, l'objet connecté transmet un troisième message, $M_3$, comprenant une première partie en clair et une seconde partie chiffrée à l'aide de la clé publique, $Q_{auth}$, qu'il a obtenue à l'étape précédente. La première partie contient l'identifiant de l'objet connecté. La seconde partie contient également cet identifiant, le certificat de la clé initiale, $CQ_{init}$, le jeton de session et la clé publique temporaire, $Q_{temp}$. La présence dans le message $M_3$ du certificat de clé initiale, $CQ_{init}$, permet d'authentifier l'objet connecté auprès du serveur d'autorisation d'accès et par conséquent d'éviter des attaques de type « man-in-the-middle ».

En 452, le serveur d'autorisation d'accès authentifie l'objet connecté au moyen du certificat de clé initiale, $CQ_{init}$. Après avoir authentifié l'objet connecté, il génère un troisième nombre aléatoire $RN_3$ et calcule un certificat implicite :

$$Cert_F = Q_{temp} + kG \tag{5}$$

Il obtient ensuite une valeur de hachage à partir du certificat et du jeton de session, soit :

$$h_F = h\left(Cert_F \| TK\right) \qquad (6)$$

où $h$ est une fonction de hachage et $Cert_F \| TK$ représente le certificat implicite concaténé au jeton de session.

Le serveur d'autorisation d'accès signe alors le certificat au moyen de sa clé privée $K_{auth}$ (jouant ici le rôle de clé maître), pour fournir la signature du certificat :

$$Sign_F = h_F k + K_{auth} \qquad (7)$$

Enfin, le serveur d'autorisation d'accès forme en 460 un quatrième message, $M_4$, comprenant le certificat ($Cert_F, Sign_F$) et le transmet à l'objet connecté. Il transmet également la signature du message $M_4$, $Sign_{auth}$ ($M_4$), au moyen de la clé privée, $K_{auth}$.

En 461, l'objet vérifie que le quatrième message est intègre au moyen de la clé publique $Q_{auth}$. Si c'est bien le cas, il calcule un couple de clé privée $K_F$ et de clé publique $Q_F$ par:

$$K_F = h\left(Cert_F \| TK\right) RN_2 + Sign_F \quad \mod. \ n \qquad (8)$$

$$Q_F = h\left(Cert_F, TK\right) Cert_F + Q_{auth} \qquad (9)$$

Au terme de l'étape 461, l'objet connecté et le serveur d'autorisation d'accès disposent chacun d'un jeu de clés asymétriques, respectivement ($K_F, Q_F$) et ($K_{auth}, Q_{auth}$), ce qui leur permet d'établir une communication sécurisée, 225, entre eux.

Le serveur d'autorisation d'accès peut alors transmettre une clé symétrique à la fois au terminal de l'utilisateur et à l'objet connecté, ou bien au serveur intermédiateur de contexte et à l'objet connecté. Ces deux éléments peuvent ensuite établir directement entre eux une liaison sécurisée sans qu'il soit besoin de qualifier la passerelle comme passerelle de confiance.

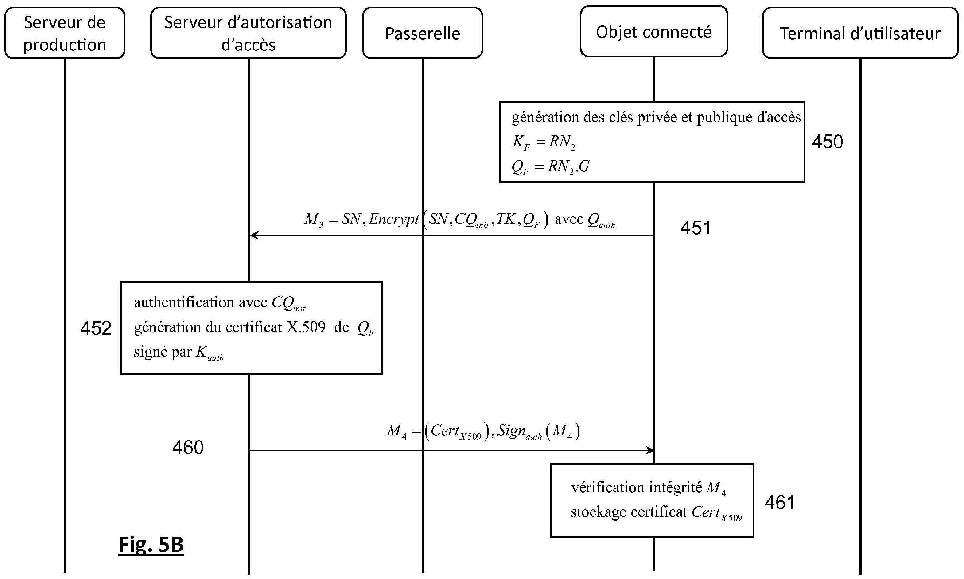

La Fig. 5B représente une seconde partie des échanges entre les éléments du système de la Fig. 2 lors de la mise en oeuvre de la méthode d'établissement d'une communication sécurisée selon une seconde variante du mode de réalisation. Cette seconde partie fait ainsi suite à la première partie précédemment décrite en relation avec les Figs. 4A et 4B.

A la différence de la première variante, à l'étape 450, on ne génère pas de clé temporaire mais directement les clés privée, $K_F$, et publique, $Q_F$, à partir du second nombre aléatoire $RN_2$ et des paramètres du cryptosystème reçus à l'étape précédente. Dans le cas où l'on utilise un cryptosystème sur courbes elliptiques de paramètres ($p,a,b,G,n$), la clé privée $K_F$ n'est autre que $K_F = RN_2$ et la clé publique $Q_F$ est obtenue par :

$$Q_F = K_F . G \qquad (10)$$

L'objet connecté demande ensuite une certification de sa clé publique auprès du serveur d'autorisation d'accès. A cette fin, l'objet connecté transmet en 451 un troisième message, $M_3$, comprenant une première partie en clair et une seconde partie chiffrée à l'aide de la clé publique, $Q_{auth}$, qu'il a obtenue à l'étape précédente. La première partie contient l'identifiant de l'objet connecté. La seconde partie contient également l'identifiant, le certificat de clé initiale, $CQ_{init}$, et la clé publique, $Q_F$, générée en 450. Comme dans la première variante, le certificat de clé initiale, $CQ_{init}$, permet d'authentifier l'objet connecté auprès du serveur d'autorisation d'accès et par conséquent d'éviter des attaques de type « man-in-the-middle ».

En 452, le serveur d'autorisation d'accès vérifie l'intégrité du message $M_3$ au moyen de sa clé privée $K_{auth}$ et authentifie l'objet connecté au moyen du certificat de clé initiale, $CQ_{init}$. Il génère ensuite un certificat de clé publique, $Cert_{X509}$ au format X.509 à partir de l'identifiant $SN$ et de la clé publique $Q_F$. La signature du certificat est effectuée au moyen de sa clé privée $K_{auth}$. On notera que le certificat est ici auto-signé dans la mesure où le serveur d'autorisation d'accès joue également le rôle d'autorité de certification.

En 461, le serveur d'autorisation d'accès transmet à l'objet connecté un quatrième message $M_4$ ainsi que sa signature $Sign_{auth}$ ($M_4$) au moyen de la clé privée $K_{auth}$. L'objet connecté vérifie l'intégrité du message $M_4$, au moyen

de la clé publique $Q_{auth}$. Lorsque le message est intègre, l'objet connecté stocke dans sa mémoire le certificat X.509, $Cert_{X509}$.

Cette seconde variante nécessite cependant une capacité mémoire plus importante que dans la première variante en raison de la taille du certificat X.509.

Comme dans la première variante, le serveur d'autorisation d'accès peut transmettre une clé symétrique à la fois au terminal de l'utilisateur et à l'objet connecté, (voire alternativement au serveur intermédiateur de contexte et à l'objet connecté) pour établir une communication sécurisée entre ces deux éléments. Dans les deux cas, la passerelle 250 réalisant l'interface entre le standard de communication sans fil utilisé par l'objet connecté et l'infrastructure IP d'Internet n'a pas besoin d'être de confiance.

**Revendications**

1. Méthode d'établissement d'une communication sécurisée de bout en bout entre le terminal d'un utilisateur (210)/ un serveur d'intermédiateur de contexte (240) et un objet connecté (261), **caractérisée en ce qu'**elle met en oeuvre un premier serveur, dit serveur d'autorisation d'accès (220) et un second serveur, dit serveur de production (230), le terminal de l'utilisateur communiquant avec le serveur d'autorisation d'accès par une première communication sécurisée (215) et le serveur de production communiquant avec le serveur d'autorisation d'accès par une seconde communication sécurisée (235), le serveur d'autorisation d'accès hébergeant une première base de données (221) contenant des informations permettant d'authentifier les différents utilisateurs et de gérer leurs droits d'accès aux différents objets connectés, le serveur de production hébergeant une seconde base de données (231) contenant des identifiants d'objets connectés et possédant un couple de clés privée et publique initiales ($K_{init}, Q_{init}$), **caractérisée en ce qu'**elle comprend les étapes suivantes :

   (a) sur une requête de l'utilisateur contenant l'identifiant de l'objet connecté *(SN),* demande de vérification du serveur d'autorisation d'accès auprès du serveur de production que cet identifiant est bien valide ;
   (b) sur initialisation de l'objet connecté, identification et authentification de l'objet connecté auprès du serveur de production, au moyen d'un premier message ($M_1$) contenant l'identifiant de l'objet connecté ainsi que ce même identifiant, chiffré par la clé publique initiale ($Qinit$)*;*
   (c) en cas de succès d'authentification de l'objet connecté, génération par le serveur d'autorisation d'accès d'un second message ($M_2$) contenant les paramètres d'un cryptosystème, le second message étant préalablement signé par le serveur de production, le message ainsi que sa signature (sgn($M_2$)) étant transmis à l'objet connecté;
   (d) génération par l'objet connecté d'un couple de clés privée et publique d'accès ($K_F, Q_F$), à partir des paramètres du cryptosystème, permettant d'établir une troisième communication sécurisée (225) entre le serveur d'autorisation d'accès et l'objet connecté ;
   (e) établissement d'une communication sécurisée entre le terminal de l'utilisateur, resp. le serveur d'intermédiation de contexte, et l'objet connecté au moyen d'une clé symétrique, distribuée par le serveur d'autorisation d'accès, d'une part au terminal d'utilisateur via la première communication sécurisée, resp. au serveur d'intermédiation via une quatrième communication sécurisée, et, d'autre part, à l'objet connecté via la troisième communication sécurisée.

2. Méthode d'établissement d'une communication sécurisée de bout en bout selon la revendication 1, **caractérisée en ce qu'**à l'étape (a), le serveur de production effectue un horodatage de l'identifiant de l'objet connecté et stocke l'estampille d'horodatage dans la seconde base de données en relation avec ledit identifiant.

3. Méthode d'établissement d'une communication sécurisée de bout en bout selon la revendication 1 ou 2, **caractérisée en ce que** lors de ou suite à son initialisation à l'étape (b), l'objet connecté génère un jeton de session (*TK*) sous la forme d'un premier nombre aléatoire ($RN_1$)*,* ainsi qu'un second nombre aléatoire ($RN_2$)*.*

4. Méthode d'établissement d'une communication sécurisée de bout en bout selon la revendication 3, **caractérisée en ce que** le premier message ($M_1$) comprend une première partie en clair comprenant l'identifiant de l'objet connecté *(SN),* et une second partie chiffrée au moyen de la clé publique initiale ($Q_{init}$)*,* la seconde partie comprenant ce même identifiant, la clé de session, ainsi que, le cas échéant, un certificat ($CQ_{init}$) de la clé publique initiale.

5. Méthode d'établissement d'une communication sécurisée de bout en bout selon la revendication 4, **caractérisée en ce qu'**à l'étape (b), le serveur de production identifie l'objet connecté si son identifiant est présent dans la seconde base de données.

**6.** Méthode d'établissement d'une communication sécurisée de bout en bout selon la revendication 5, **caractérisée en ce qu'**à l'étape (b), le serveur de production authentifie l'objet connecté en déchiffrant la seconde partie du premier message à l'aide de la clé privée initiale et en comparant le résultat du déchiffrage avec la première partie.

**7.** Méthode d'établissement d'une communication sécurisée de bout en bout selon les revendications 2 et 6, **caractérisée en ce qu'**à l'étape (b), le serveur de production ne déclare l'objet connecté que si, à la date de l'authentification, l'estampille d'horodatage n'est pas périmée.

**8.** Méthode d'établissement d'une communication sécurisée de bout en bout selon la revendication 6 ou 7, **caractérisée en ce qu'**au terme de l'étape (b), le serveur de production transmet au serveur d'autorisation d'accès le résultat de l'authentification (*ACK,NACK*) accompagné du numéro d'identifiant de l'objet connecté et, le cas échéant, du certificat de la clé publique initiale ($CQ_{init}$).

**9.** Méthode d'établissement d'une communication sécurisée de bout en bout selon la revendication 8, **caractérisée en ce qu'**en cas de succès d'authentification à l'étape (b), le serveur d'autorisation d'accès stocke dans la première base de données le jeton de session en relation avec l'identifiant d'objet connecté.

**10.** Méthode d'établissement d'une communication sécurisée de bout en bout selon l'une des revendications précédentes, **caractérisée en ce qu'**à l'étape (c), le second message ($M_2$) comprend l'identifiant d'objet connecté (*SN*), le jeton de session (*TK*), la clé publique du serveur d'autorisation d'accès ($Q_{auth}$) et les paramètres d'un cryptosystème.

**11.** Méthode d'établissement d'une communication sécurisée de bout en bout selon la revendication 10, **caractérisée en ce que** le cryptosystème est un cryptosystème sur une courbe elliptique.

**12.** Méthode d'établissement d'une communication sécurisée de bout en bout selon la revendication 11, **caractérisée en ce qu'**à l'étape (c) le serveur de production signe le second message au moyen de la clé privée initiale et renvoie la signature ainsi obtenue (sgn($M_2$) au serveur d'autorisation d'accès.

**13.** Méthode d'établissement d'une communication sécurisée de bout en bout selon la revendication 12, **caractérisée en ce que** le serveur d'autorisation d'accès transmet le second message ($M_2$) ainsi que sa signature (sgn($M_2$) à l'objet connecté.

**14.** Méthode d'établissement d'une communication sécurisée de bout en bout selon la revendication 13, **caractérisée en ce qu'**à l'étape (d), l'objet connecté génère une clé publique temporaire à partir du second nombre aléatoire et d'un point générateur (*G*) sur la courbe elliptique.

**15.** Méthode d'établissement d'une communication sécurisée de bout en bout selon la revendication 14, **caractérisée en ce que** l'objet connecté génère un troisième message ($M_3$) contenant, dans une première partie en clair, son identifiant et, dans une seconde partie chiffrée au moyen de la clé publique du serveur d'autorisation d'accès ($Q_{auth}$), ce même identifiant, le certificat de la clé publique initiale ($CQ_{init}$), le jeton d'accès ainsi que la clé publique temporaire ($Q_{temp}$).

**16.** Méthode d'établissement d'une communication sécurisée de bout en bout selon la revendication 15, **caractérisée en ce que** le serveur d'autorisation d'accès génère un certificat implicite d'une clé publique d'accès ($Cert_F$) ainsi qu'une signature de ce certificat ($Sign_F$) à partir de la clé publique temporaire ($Q_{temp}$), d'un troisième nombre aléatoire (*k*), du jeton de session (*TK*), de la clé privée du serveur d'autorisation ($K_{auth}$) et des paramètres du cryptosystème sur courbe elliptique.

**17.** Méthode d'établissement d'une communication sécurisée de bout en bout selon la revendication 16, **caractérisée en ce que** le serveur d'autorisation d'accès génère un quatrième message ($M_4$) comprenant le certificat implicite de la clé publique d'accès ($Cert_F$) ainsi que sa signature ($Sign_F$), ce message ainsi que sa signature ($Sgn(M_4)$ au moyen de la clé privée du serveur d'autorisation d'accès étant transmis à l'objet connecté.

**18.** Méthode d'établissement d'une communication sécurisée de bout en bout selon la revendication 17, **caractérisée en ce que** l'objet connecté, après avoir vérifié l'intégrité du quatrième message au moyen de la clé publique du serveur d'autorisation d'accès, génère ledit couple de clés privée et publique d'accès ($K_F,Q_F$) à partir du certificat implicite de la clé publique d'accès ($Cert_F$) et de sa signature ($Cert_F$), du jeton de session (*TK*), de la clé publique d'autorisation d'accès ($Q_{auth}$) et des paramètres du cryptosystème sur courbe elliptique.

19. Méthode d'établissement d'une communication sécurisée de bout en bout selon la revendication 13, **caractérisée en ce que** l'objet connecté génère la clé privée d'accès ($K_F$) à partir du second nombre aléatoire ($RN_2$) et la clé publique d'accès ($Q_F$) à partir de cette dernière et des paramètres du cryptosytème sur courbe elliptique.

20. Méthode d'établissement d'une communication sécurisée de bout en bout selon la revendication 19, **caractérisée en ce que** l'objet connecté génère un troisième message ($M_3$) contenant, dans une première partie en clair, son identifiant et, dans une seconde partie chiffrée au moyen de la clé publique du serveur d'autorisation d'accès ($Q_{auth}$), ce même identifiant, le certificat de clé initiale, $CQ_{init}$, le jeton d'accès, ainsi que la clé publique d'accès ($Q_F$).

21. Méthode d'établissement d'une communication sécurisée de bout en bout selon la revendication 20, **caractérisée en ce que** le serveur d'autorisation d'accès génère un certificat X.509 ($Cert_{X.509}$) de la clé publique d'accès ($Q_F$), à partir de l'identifiant de l'objet connecté et de la clé publique d'accès, au moyen de sa clé privée d'autorisation d'accès ($K_{auth}$).

22. Méthode d'établissement d'une communication sécurisée de bout en bout selon la revendication 21, **caractérisée en ce que** le serveur d'autorisation d'accès génère un quatrième message ($M_4$) comprenant le certificat de la clé publique d'accès ($Cert_{X.509}$) ainsi que sa signature ($Sign_{auth}(M4)$) au moyen de la clé privée du serveur d'autorisation d'accès, ce message ainsi que sa signature ($Sign_{auth}(M_4)$) étant transmis à l'objet connecté.

23. Méthode d'établissement d'une communication sécurisée de bout en bout selon la revendication 21, **caractérisée en ce que**, après avoir vérifié l'intégrité du quatrième message au moyen de la clé publique du serveur d'autorisation d'accès, l'objet connecté stocke dans sa mémoire le certificat de la clé publique d'accès ($Cert_{X.509}$).

## Patentansprüche

1. Verfahren zur Herstellung einer gesicherten Ende-Zu-Ende-Kommunikation zwischen dem Endgerät eines Benutzers (210)/ einem Kontextbrokerserver (240) und einem angeschlossenen Objekt (261), **dadurch gekennzeichnet, dass** es einen ersten Server verwendet, genannt Zugriffsberechtigungsserver (220), und einen zweiten Server, genannt Produktionsserver (230), wobei das Endgerät des Benutzers mit dem Zugriffsberechtigungsserver durch eine erste gesicherte Kommunikation (215) kommuniziert, und der Produktionsserver mit dem Zugriffsberechtigungsserver durch eine zweite gesicherte Kommunikation (235) kommuniziert, wobei der Zugriffsberechtigungsserver eine erste Datenbank (221) umfasst, die Informationen enthält, die die Authentifizierung der verschiedenen Benutzer und die Steuerung ihrer Zugriffsrechte für verschiedene angeschlossene Objekte erlaubt, wobei der Produktionsserver eine zweite Datenbank (231) umfasst, die Identifikatoren von angeschlossenen Objekten enthält und ein Paar von anfänglichen privaten und öffentlichen Schlüsseln ($K_{init}, Q_{init}$) besitzt, **dadurch gekennzeichnet, dass** es die folgenden Schritte umfasst:

    (a) auf eine Anforderung des Benutzers, die den Identifikator des angeschlossenen Objekts ($SN$) enthält, Anfrage zur Verifizierung des Zugriffsberechtigungsservers beim Produktionsserver, dass dieser Identifikator gültig ist;
    (b) auf Initialisierung des angeschlossenen Objekts, Identifizierung und Authentifizierung des angeschlossenen Objekts beim Produktionsserver mit Hilfe einer ersten Nachricht ($M_1$), die den Identifikator des angeschlossenen Objekts enthält, sowie dieses gleichen Identifikators, verschlüsselt durch den anfänglichen öffentlichen Schlüssel ($Q_{init}$);
    (c) im Fall einer erfolgreichen Authentifizierung des angeschlossenen Objekts, Erzeugung einer zweiten Nachricht ($M_2$) durch den Zugriffsberechtigungsserver, die die Parameter eines Kryptosystems enthält, wobei die zweite Nachricht zuvor durch den Produktionsserver signiert wurde, wobei die Nachricht sowie ihre Signatur ($sgn(M_2)$) zum angeschlossenen Objekt übertragen werden;
    (d) Erzeugung, durch das angeschlossene Objekt, eines Paars von privaten und öffentlichen Zugriffsschlüsseln ($K_F, Q_F$) ausgehend von den Parameter des Kryptosystems, was die Herstellung einer dritten gesicherten Kommunikation (225) zwischen dem Zugriffsberechtigungsserver und dem angeschlossenen Objekt erlaubt;
    (e) Herstellung einer gesicherten Kommunikation zwischen dem Endgerät des Benutzers beziehungsweise dem Kontextbrokerserver und dem angeschlossenen Objekt mit Hilfe eines symmetrischen Schlüssels, der verteilt wird durch den Zugriffsberechtigungsserver einerseits an das Endgerät des Benutzers über die erste gesicherte Kommunikation beziehungsweise an den Brokerserver über eine vierte gesicherte Kommunikation und andererseits an das angeschlossene Objekt über die dritte gesicherte Kommunikation.

**2.** Verfahren zur Herstellung einer gesicherten Ende-Zu-Ende-Kommunikation nach Anspruch 1, **dadurch gekennzeichnet, dass** im Schritt (a) der Produktionsserver eine Zeitstempelung des Identifikators des angeschlossenen Objekts durchführt und den Zeitstempel in der zweiten Datenbank in Zusammenhang mit dem Identifikator speichert.

**3.** Verfahren zur Herstellung einer gesicherten Ende-Zu-Ende-Kommunikation nach Anspruch 1 oder 2, **dadurch gekennzeichnet, dass** das angeschlossene Objekt während oder nach seiner Initialisierung im Schritt (b) ein Session-Token ($TK$) in Form einer ersten Zufallszahl ($RN_1$) sowie eine zweite Zufallszahl ($RN_2$) erzeugt.

**4.** Verfahren zur Herstellung einer gesicherten Ende-Zu-Ende-Kommunikation nach Anspruch 3, **dadurch gekennzeichnet, dass** die erste Nachricht ($M_1$) einen ersten unverschlüsselten Teil umfasst, der den Identifikator des angeschlossenen Objekts ($SN$) enthält, und einen zweiten Teil, der mit Hilfe des anfänglichen öffentlichen Schlüssels ($Q_{init}$) verschlüsselt ist, wobei der zweite Teil diesen gleichen Identifikator, den Session-Schlüssel sowie gegebenenfalls ein Zertifikat ($CQ_{init}$) des anfänglichen öffentlichen Schlüssels enthält.

**5.** Verfahren zur Herstellung einer gesicherten Ende-Zu-Ende-Kommunikation nach Anspruch 4, **dadurch gekennzeichnet, dass** der Produktionsserver im Schritt (b) das angeschlossene Objekt identifiziert, wenn sein Identifikator in der zweiten Datenbank enthalten ist.

**6.** Verfahren zur Herstellung einer gesicherten Ende-Zu-Ende-Kommunikation nach Anspruch 5, **dadurch gekennzeichnet, dass** der Produktionsserver im Schritt (b) das angeschlossene Objekt authentifiziert, indem er den zweiten Teil der ersten Nachricht mit Hilfe des anfänglichen privaten Schlüssels entschlüsselt und das Entschlüsselungsergebnis mit dem ersten Teil vergleicht.

**7.** Verfahren zur Herstellung einer gesicherten Ende-Zu-Ende-Kommunikation nach den Ansprüchen 2 und 6, **dadurch gekennzeichnet, dass** der Produktionsserver im Schritt (b) das angeschlossene Objekt nur dann deklariert, wenn der Zeitstempel zum Zeitpunkt der Authentifizierung nicht abgelaufen ist.

**8.** Verfahren zur Herstellung einer gesicherten Ende-Zu-Ende-Kommunikation nach Anspruch 6 oder 7, **dadurch gekennzeichnet, dass** der Produktionsserver am Ende von Schritt (b) an den Zugriffsberechtigungsserver das Ergebnis der Authentifizierung *(ACK, NACK)* überträgt, zusammen mit der Identifikationsnummer des angeschlossenen Objekts und gegebenenfalls dem Zertifikat des anfänglichen öffentlichen Schlüssels ($CQ_{init}$).

**9.** Verfahren zur Herstellung einer gesicherten Ende-Zu-Ende-Kommunikation nach Anspruch 8, **dadurch gekennzeichnet, dass** der Zugriffsberechtigungsserver im Fall einer erfolgreichen Authentifizierung im Schritt (b) in der ersten Datenbank den Session-Token mit Bezug zum Identifikator des angeschlossenen Objekts speichert.

**10.** Verfahren zur Herstellung einer gesicherten Ende-Zu-Ende-Kommunikation nach einem der vorhergehenden Ansprüche, **dadurch gekennzeichnet, dass** im Schritt (c) die zweite Nachricht ($M_2$) den Identifikator des angeschlossenen Objekts ($SN$), das Session-Token ($TK$), den öffentlichen Schlüssel des Zugriffsberechtigungsservers ($Q_{auth}$) und die Parameter eines Kryptosystems enthält.

**11.** Verfahren zur Herstellung einer gesicherten Ende-Zu-Ende-Kommunikation nach Anspruch 10, **dadurch gekennzeichnet, dass** das Kryptosystem ein Kryptosystem auf einer elliptischen Kurve ist.

**12.** Verfahren zur Herstellung einer gesicherten Ende-Zu-Ende-Kommunikation nach Anspruch 11, **dadurch gekennzeichnet, dass** der Produktionsserver im Schritt (c) die zweite Nachricht mit Hilfe des anfänglichen privaten Schlüssels signiert und die derart erhaltene Signatur ($sgn(M_2)$) zum Zugriffsberechtigungsserver zurückschickt.

**13.** Verfahren zur Herstellung einer gesicherten Ende-Zu-Ende-Kommunikation nach Anspruch 12, **dadurch gekennzeichnet, dass** der Zugriffsberechtigungsserver die zweite Nachricht ($M_2$) sowie ihre Signatur ($sgn(M_2)$) an das angeschlossene Objekt überträgt.

**14.** Verfahren zur Herstellung einer gesicherten Ende-Zu-Ende-Kommunikation nach Anspruch 13, **dadurch gekennzeichnet, dass** das angeschlossene Objekt im Schritt (d) einen temporären öffentlichen Schlüssel ausgehend von der zweiten Zufallszahl und einem Erzeugungspunkt ($G$) auf der elliptischen Kurve erzeugt.

**15.** Verfahren zur Herstellung einer gesicherten Ende-Zu-Ende-Kommunikation nach Anspruch 14, **dadurch gekennzeichnet, dass** das angeschlossene Objekt eine dritte Nachricht ($M_3$) erzeugt, die in einem ersten unverschlüsselten Teil seinen Identifikator enthält, und in einem zweiten Teil, der mit Hilfe des öffentlichen Schlüssels des Zugriffsberechtigungsservers ($Q_{auth}$) verschlüsselt wurde, diesen gleichen Identifikator, das Zertifikat des anfänglichen öffentlichen Schlüssels ($CQ_{init}$), das Zugriffs-Token sowie den temporären öffentlichen Schlüssel ($Qtemp$).

16. Verfahren zur Herstellung einer gesicherten Ende-Zu-Ende-Kommunikation nach Anspruch 15, **dadurch gekennzeichnet, dass** der Zugriffsberechtigungsserver ein implizites Zertifikat eines öffentlichen Zugriffsschlüssels ($Cert_F$) sowie eine Signatur dieses Zertifikats ($Sign_F$) ausgehend von dem temporären öffentlichen Schlüssel ($Q_{temp}$), von einer dritten Zufallszahl ($k$), vom Session-Token ($TK$), vom privaten Schlüssel des Berechtigungsservers ($K_{auth}$) und von den Parametern des Kryptosystems auf einer elliptischen Kurve erzeugt.

17. Verfahren zur Herstellung einer gesicherten Ende-Zu-Ende-Kommunikation nach Anspruch 16, **dadurch gekennzeichnet, dass** der Zugriffsberechtigungsserver eine vierte Nachricht ($M_4$) erzeugt, die das implizite Zertifikat des öffentlichen Zugriffsschlüssels ($Cert_F$) sowie seine Signatur ($Sign_F$) enthält, wobei diese Nachricht sowie ihre Signatur (Sgn($M_4$)) mit Hilfe des privaten Schlüssels des Zugriffsberechtigungsservers an das angeschlossene Objekt übertragen werden.

18. Verfahren zur Herstellung einer gesicherten Ende-Zu-Ende-Kommunikation nach Anspruch 17, **dadurch gekennzeichnet, dass** das angeschlossene Objekt nach Überprüfung der Integrität der vierten Nachricht mit Hilfe des öffentlichen Schlüssels des Zugriffsberechtigungsservers das Paar von privaten und öffentlichen Zugriffsschlüsseln ($K_F$, $Q_F$) ausgehend vom impliziten Zertifikat des öffentlichen Zugriffsschlüssels ($Cert_F$) und seiner Signatur ($Cert_F$), vom Session-Token ($TK$), vom öffentlichen Zugriffsberechtigungsschlüssel ($Q_{auth}$) und von den Parametern des Kryptosystems auf einer elliptischen Kurve erzeugt.

19. Verfahren zur Herstellung einer gesicherten Ende-Zu-Ende-Kommunikation nach Anspruch 13, **dadurch gekennzeichnet, dass** das angeschlossene Objekt den privaten Zugriffsschlüssel ($K_F$) ausgehend von der zweiten Zufallszahl ($RN_2$) erzeugt, und den öffentlichen Zugriffsschlüssel ($Q_F$) ausgehend von dieser letztgenannten und von den Parametern des Kryptosystems einer elliptischen Kurve.

20. Verfahren zur Herstellung einer gesicherten Ende-Zu-Ende-Kommunikation nach Anspruch 19, **dadurch gekennzeichnet, dass** das angeschlossene Objekt eine dritte Nachricht ($M_3$) erzeugt, die in einem ersten unverschlüsselten Teil seinen Identifikator enthält, und in einem zweiten Teil, der mit Hilfe des öffentlichen Schlüssels des Zugriffsberechtigungsservers ($Q_{auth}$) verschlüsselt wurde, diesen gleichen Identifikator, das anfängliche Schlüsselzertifikat, $CQ_{init}$, den Zugriffs-Token sowie den öffentlichen Zugriffsschlüssel ($Q_F$).

21. Verfahren zur Herstellung einer gesicherten Ende-Zu-Ende-Kommunikation nach Anspruch 20, **dadurch gekennzeichnet, dass** der Zugriffsberechtigungsserver ein Zertifikat X.509 ($Cert_{X.509}$) des öffentlichen Zugriffsschlüssels ($Q_F$) ausgehend vom Identifikator des angeschlossenen Objekts und vom öffentlichen Zugriffsschlüssel mit Hilfe seines privaten Zugriffsberechtigungsschlüssels ($K_{auth}$) erzeugt.

22. Verfahren zur Herstellung einer gesicherten Ende-Zu-Ende-Kommunikation nach Anspruch 21, **dadurch gekennzeichnet, dass** der Zugriffsberechtigungsserver eine vierte Nachricht ($M_4$) erzeugt, die das Zertifikat des öffentlichen Zugriffsschlüssels ($Cert_{X.509}$) sowie seine Signatur ($Sign_{auth}(M_4)$) enthält, und zwar mit Hilfe des privaten Schlüssels des Zugriffsberechtigungsservers, wobei diese Nachricht sowie ihre Signatur ($Sign_{auth}(M_4)$) an das angeschlossene Objekt übertragen werden.

23. Verfahren zur Herstellung einer gesicherten Ende-Zu-Ende-Kommunikation nach Anspruch 21, **dadurch gekennzeichnet, dass** nach Überprüfung der Integrität der vierten Nachricht mit Hilfe des öffentlichen Schlüssels des Zugriffsberechtigungsservers das angeschlossene Objekt das Zertifikat des öffentlichen Zugriffsschlüssels ($Cert_{X.509}$) in seinem Speicher speichert.

**Claims**

1. Method for setting up a secure end-to-end communication between a user terminal (210) / a context broker server (240) and a connected object (261), **characterised in that** it uses a first server called the access authorisation server (220), and a second server called the production server (230), the user terminal communicating with the access authorisation server through a first secure communication (215) and the production server communicating with the access authorisation server through a second secure communication (235), the access authorisation server hosting a first database (221) containing information to authenticate the different users and to manage their access rights to the different connected objects, the production server hosting a second database (231) containing identifiers of the connected objects and having an initial private and public key pair ($K_{init}$, $Q_{init}$), **characterised in that** it includes the following steps:

(a) following a user request containing the identifier of the connected object ($SN$), request from the access authorisation server to the production server to verify that this identifier is valid;

(b) when the connected object is initialised, identification and authentication of the connected object by the production server, using a first message ($M_1$) containing the identifier of the connected objected and the same identifier, encrypted by the initial public key ($Q_{init}$);

(c) if the connected object is successfully authenticated, the access authorisation server generates a second message ($M_2$) containing the parameters of a cryptosystem, the second message being previously signed by the production server, the message and its signature (sgn($M_2$)) being transmitted to the connected object;

(d) the connected object generates a private and public access key pair ($K_F, Q_F$), starting from the parameters of the cryptosystem, to set up a third secure communication (225) between the access authorisation server and the connected object;

(e) set up a secure communication between the user terminal, resp. the context broker server, and the connected object by means of a symmetric key distributed by the access authorisation server, firstly to the user terminal through the first secure communication, resp. the broker server, through a fourth secure communication, and secondly to the connected object through the third secure communication.

2. Method for setting up a secure end-to-end communication according to claim 1, **characterised in that** in step (a), the production timestamps the identifier of the connected object and stores the timestamp in the second database using said identifier.

3. Method for setting up a secure end-to-end communication according to claim 1 or 2, **characterised in that** during its initialisation in step (b), the connected object generates a session token ($TK$) in the form of a first random number ($RN_1$) and a second random number ($RN_2$).

4. Method for setting up a secure end-to-end communication according to claim 3, **characterised in that** the first message ($M_1$) comprises a first plain text part including the identifier of the connected object ($SN$), and a second part encrypted using the initial public key ($Q_{init}$), the second part including the same identifier, the session key and possibly a certificate ($CQ_{init}$) for the initial public key.

5. Method for setting up a secure end-to-end communication according to claim 4, **characterised in that** in step (b), the production server identifies the connected object if its identifier is present in the second database.

6. Method for setting up a secure end-to-end communication according to claim 5, **characterised in that** in step (b), the production server authenticates the connected object by decrypting the second part of the first message using the initial private key and comparing the result of the decryption with the first part.

7. Method for setting up a secure end-to-end communication according to claims 2 and 6, **characterised in that** in step (b), the production server only declares the connected object if the timestamp has not expired on the authentication date.

8. Method for setting up a secure end-to-end communication according to claim 6 or 7, **characterised in that** when step (b) is finished, the production server transmits the authentication result ($ACK,NACK$) to the access authorisation server together with the identifier number of the connected object and possible the certificate of the initial public key ($CQ_{init}$).

9. Method for setting up a secure end-to-end communication according to claim 8, **characterised in that** if the authentication in step (b) is successful, the access authorisation server stores the session token in the first database using the identifier of the connected object.

10. Method for setting up a secure end-to-end communication according to any one of the previous claims, **characterised in that** in step (c), the second message ($M_2$) includes the identifier of the connected object ($SN$), the session token ($TK$), the public key of the access authorisation server ($Q_{auth}$) and the parameters of a cryptosystem.

**11.** Method for setting up a secure end-to-end communication according to claim 10, **characterised in that** the cryptosystem is a cryptosystem on an elliptical curve.

**12.** Method for setting up a secure end-to-end communication according to claim 11, **characterised in that** in step (c), the production server signs the second message using the initial private key and sends the signature thus obtained (sgn($M_2$)) to the access authorisation server.

**13.** Method for setting up a secure end-to-end communication according to claim 12, **characterised in that** the access authorisation server transmits the second message ($M_2$) and its signature (sgn($M_2$)) to the connected object.

**14.** Method for setting up a secure end-to-end communication according to claim 13, **characterised in that** in step (d), the connected object generates a temporary public key starting from the second random number and a generating point (G) on the elliptical curve.

**15.** Method for setting up a secure end-to-end communication according to claim 14, **characterised in that** the connected object generates a third message ($M_3$) containing its unencrypted identifier in a first part, and the same identifier, the certificate of the initial public key ($CQ_{init}$), the access token and the temporary public key ($Q_{temp}$) in a second part encrypted using the public key of the access authorisation server ($Q_{auth}$).

**16.** Method for setting up a secure end-to-end communication according to claim 15, **characterised in that** the access authorisation server generates an implicit certificate of a public access key ($Cert_F$) and a signature of this certificate ($Sign_F$) using the temporary public key ($Q_{temp}$), a third random number ($k$), the session token ($TK$), the private key of the authorisation server ($K_{auth}$) and parameters of the cryptosystem on an elliptical curve.

**17.** Method for setting up a secure end-to-end communication according to claim 16, **characterised in that** the access authorisation server generates a fourth message ($M_4$) containing the implicit certificate of the public access key ($Cert_F$) and its signature ($Sign_F$), this message and its signature ($Sgn(M_4)$) using the private key of the access authorisation server being transmitted to the connected object.

**18.** Method for setting up a secure end-to-end communication according to claim 17, **characterised in that** after having checked the integrity of the fourth message using the public key of the access authorisation server, the connected object generates said private and public access key pair ($K_F,Q_F$) starting from the implicit signature of the public access key ($Cert_F$) and its signature ($Cert_F$), the session token ($TK$), the public access authorisation key ($Q_{auth}$) and parameters of the cryptosystem on an elliptical curve.

**19.** Method for setting up a secure end-to-end communication according to claim 13, **characterised in that** the connected object generates the private access key ($K_F$) from the second random number ($RN_2$) and the public access key ($Q_F$) from the private access key and the parameters of the cryptosystem on an elliptical curve.

**20.** Method for setting up a secure end-to-end communication according to claim 19, **characterised in that** the connected object generates a third message ($M_3$) containing its plain text identifier in a first part, and the same identifier, the certificate of the initial key ($CQ_{init}$), the access token and the public access key ($Q_F$) in a second part encrypted by the public key of the access authorisation server ($Q_{auth}$).

**21.** Method for setting up a secure end-to-end communication according to claim 20, **characterised in that** the access authorisation server generates an X.509 certificate ($Cert_{X.509}$) of the public access key ($Q_F$), using the identifier of the connected object and the public access key, using its private access authorisation key ($K_{auth}$).

**22.** Method for setting up a secure end-to-end communication according to claim 21, **characterised in that** the access authorisation server generates a fourth message ($M_4$) containing the certificate of the public access key ($Cert_{X.509}$) and its signature ($Sign_{auth}(M_4)$) using the private key of the access authorisation server, this message and its signature ($Sign_{auth}(M_4)$) being transmitted to the connected object.

**23.** Method for setting up a secure end-to-end communication according to claim 21, **characterised in that** after having identified the integrity of the fourth message using the public key of the access authorisation server, the connected object stores the certificate of the public access key ($Cert_{X.509}$) in its memory.

**Fig. 1**

**Fig. 2**

Enregistrement par l'utilisateur de l'objet connecté auprès du serveur d'autorisation d'accès ⟋—310

↓

Demande du serveur d'autorisation au serveur de production d'identifier l'objet connecté ⟋—320

↓

Initialisation de l'objet Démarrage d'une session et demande d'authentification auprès du serveur de production ⟋—330

↓

transmission par le serveur d'autorisation d'accès d'un message contenant les paramètres d'un cryptosystème, le message étant préalablement signé par le serveur de production ⟋—340

↓

établissement d'une communication sécurisée entre le serveur d'autorisation d'accès et l'objet connecté au moyen d'un couple de clés générées à partir des paramètres du cryptosystème ⟋—350

↓

distribution par le serveur d'autorisation d'une clé symétrique à l'utilisateur et à l'objet connecté pour établir une communication sécurisée de bout en bout ⟋—360

**Fig. 3**

**Fig. 4A**

Serveur de production

Serveur d'autorisation d'accès

Passerelle

Objet connecté

Terminal d'utilisateur

requête d'entregistrement de l'objet connecté $(SN, URL_{prod})$ — 410

420 — requête de vérification d'identifiant $(SN)$

ON

430

génération de $RN_1 = TK$ et $RN_2$

431 — $M_1 = SN, Encrypt(TK, SN, CQ_{init})$ avec $Q_{init}$

vérification de la non-péremption de la valeur d'horodatage — 432

authentification avec $K_{init}$ — 433

434 — $(SN, TK, CQ_{init}, ACK / NACK)$

stockage de $TK$ en relation avec $SN$ — 435

EP 3 174 241 B1

Serveur de production

Serveur d'autorisation d'accès

Passerelle

Objet connecté

Terminal d'utilisateur

$$M_2 = \left(SN, TK, Q_{auth}, Cryptosystem\right)$$

requête de signature

440

signature avec $K_{init}$    441

442    $Sgn_{prod}\left(M_2\right)$

443    $M_2, Sgn_{prod}\left(M_2\right)$

vérification de l'intégrité de $M_2$
stockage de $Q_{auth}$ et de $Cryptosystem$    444

**Fig. 4B**

| Serveur de production | Serveur d'autorisation d'accès | Passerelle | Objet connecté | Terminal d'utilisateur |

génération de clé publique temporaire  **450**
$Q_{temp} = RN_2.G$

$M_3 = SN, Encrypt\left(SN, CQ_{init}, TK, Q_{temp}\right)$ avec $Q_{auth}$  **451**

**452**
authentification avec $CQ_{init}$
génération de $k = RN_3$
calcul de $Cert_F = Q_{temp} + k.G$
$h_F = hash\left(Cert_F \| TK\right)$
$Sign_F = h_F.k + K_{auth}$

**460**
$M_4 = \left(Cert_F, Sign_F\right), Sign_{auth}\left(M_4\right)$

vérification intégrité $M_4$
calcul de la clé privée $K_F = h\left(Cert_F \| TK\right)RN_2 + Sign_F$  mod. $n$  **461**
calcul de la clé publique $Q_F = h\left(Cert_F, TK\right)Cert_F + Q_{auth}$

**Fig. 5A**

| Serveur de production | Serveur d'autorisation d'accès | Passerelle | Objet connecté | Terminal d'utilisateur |
|---|---|---|---|---|

génération des clés privée et publique d'accès

$K_F = RN_2$

$Q_F = RN_2.G$

450

$M_3 = SN, Encrypt\left(SN, CQ_{init}, TK, Q_F\right)$ avec $Q_{auth}$    451

452    authentification avec $CQ_{init}$

génération du certificat X.509 de $Q_F$

signé par $K_{auth}$

460    $M_4 = \left(Cert_{X509}\right), Sign_{auth}\left(M_4\right)$

vérification intégrité $M_4$

stockage certificat $Cert_{X509}$    461

**Fig. 5B**

**EP 3 174 241 B1**

**RÉFÉRENCES CITÉES DANS LA DESCRIPTION**

**Documents brevets cités dans la description**

- US 20080170693 A1